**Europäisches Patentamt**

(19) **European Patent Office**

**Office européen des brevets**

(11) Numéro de publication: **0 084 499
B1**

(12) # FASCICULE DE BREVET EUROPEEN

(45) Date de publication du fascicule du brevet:
**13.11.85**

(21) Numéro de dépôt: **83400111.7**

(22) Date de dépôt: **17.01.83**

(51) Int. Cl.⁴: **F 16 B 13/00,** F 16 G 11/00,
E 04 C 5/12

(54) Procédé d'ancrage d'éléments allongés métalliques soumis à des contraintes de travail élevées et ancrages ainsi réalisés.

(30) Priorité: **20.01.82 FR 8200838**

(43) Date de publication de la demande:
**27.07.83 Bulletin 83/30**

(45) Mention de la délivrance du brevet:
**13.11.85 Bulletin 85/46**

(84) Etats contractants désignés:
**BE DE GB IT NL**

(56) Documents cités:
**FR - A - 1 528 919
FR - A - 2 248 738
US - A - 1 909 026
US - A - 2 244 696
US - A - 2 779 613**

(73) Titulaire: **INSTITUT FRANCAIS DU PETROLE, 4, Avenue
de Bois-Préau, F-92502 Rueil-Malmaison (FR)**

(72) Inventeur: **Le Boucher, Bernard, 28, rue de l'Orangerie,
F-78000 Versailles (FR)**
Inventeur: **Feret, Jany, 14, avenue de l'Europe,
F-78160 Marly le Roi (FR)**

BUNDESDRUCKEREI BERLIN

## Description

La présente invention concerne un procédé d'ancrage d'éléments allongés devant être soumis à des contraintes de travail élevées et les ancrages ainsi réalisés. Les éléments à ancrer peuvent être des fils ronds, des fils aplatis ou des fils de tout autre profil particulier.

Ces éléments allongés sont généralement formés d'aciers à hautes caractéristiques mécaniques. Les contraintes élevés que subissent les éléments doivent être reportées à l'extrémité du dispositif dont l'élément allongé constitue soit un brin (comme dans les câbles, les armatures de conduites flexibles), soit la totalité.

L'art antérieur peut être illustré par les brevets américain 2 779 613, 2 244 696, 1 909 026 et 3 376 060, allemand 2 360 289 et français 2 248 738.

Notamment, d'après F. Leonardt et E. Mönig dans »Vorlesungen über Massivbau« et d'après G. Franz dans »Konstruktionslehre des Stahlbetons«, il est connu, pour augmenter la force d'ancrage, de créer des nervures et des cavités continues ou discontinues et de forme diverse sur des tiges ou des fils, constituant des éléments d'ouvrage et qui sont ensuite enfouis dans du béton.

Mais, l'élaboration de ces structures en saillie et en cavité crée un déséquilibre entre les forces de compression et de tension au sein même de la tige ou du fil et de ce fait les propriétés mécaniques des éléments métalliques ainsi travaillés, sont altérées.

Les hautes caractéristiques mécaniques du fil peuvent être obtenues soit avec un acier spécial, soit avec un acier amené aux caractéristiques voulues par étirage à froid.

Dans ces deux cas, on doit réaliser l'ancrage sans modifier les caractéristiques mécaniques de l'élément allongé à son extrémité. Cette condition exclut tout procédé faisant intervenir de très haute température, tels que soudage, brasage, par quelque méthode que ce soit.

Un procédé généralement utilisé consiste à former à l'extrémité de l'élément allongé une boucle simple qui est noyée dans le milieu d'ancrage. Ce milieu d'ancrage peut être un métal ou alliage à point de fusion aussi bas que possible: alliage plomb-étain ou plomb-étain-antimoine, ou encore le zinc, le cadmium ou leurs alliages, à la condition d'avoir une température de fusion suffisamment basse.

Le milieu d'ancrage peut également être formé de résines synthétiques (résines polyester, époxy, etc ...). Dans ce dernier cas, l'adhérence de l'élément métallique à la résine est faible. L'expérience montre que la boucle soumise à la contrainte de travail peut se dégager de la résine en se déroulant. Il serait possible d'éviter ce déroulement en remplaçant la boucle simple par une spirale ou en réalisant des ondulations de l'élément à son extrémité à ancrer. Dans les deux cas, la place occupée par cette extrémité serait trop grande pour qu'elle puisse être logée dans le raccord d'ancrage, surtout dans le cas où le système utilise un grand nombre d'éléments allongés.

Il est donc nécessaire de disposer d'un procédé d'ancrage résistant et occupant aussi peu de place que possible.

L'invention résout ces problèmes avec un procédé pour accroître la tenue à l'ancrage d'une extrémité d'un élément allongé métallique destinée à être noyée dans un milieu d'ancrage en vue de résister à des contraintes élevées, selon lequel on adapte à cette extrémité au moins un élément d'accrochage que l'on fixe audit élément allongé métallique avant de noyer l'extrémité de celui-ci dans le milieu d'ancrage, caractérisé en ce qu'on utilise un mode de fixation n'entraînant aucune modification substantielle des caractéristiques mécaniques de l'élément allongé à son extrémité.

Des exemples de réalisation de l'invention sont illustrés par les dessins annexés où:

La figure montre l'extrémité d'un élément allongé métallique prête à l'ancrage, après application du procédé selon l'invention,

la figure 1A est une vue de détail de la figure 1,

la figure 2 montre diverses sections du fil d'ancrage,

la figure 3 représente schématiquement l'extrémité de l'élément allongé métallique noyée dans le milieu d'ancrage, et

la figure 4 représente schématiquement l'extrémité de l'élément allongé métallique après application du procédé selon l'invention, noyée dans le milieu d'ancrage.

Le procédé selon l'invention, qui permet d'obtenir un ancrage adéquat d'une extrémité d'un élément allongé métallique 1, est caractérisé dans l'exemple illustré, en ce qu'on dispose sur une longueur suffisante autour de l'extrémité à ancrer de l'élément métallique, au moins un fil d'accrochage 2 rond, plat, ou ayant un profil comportant une ou plusieurs faces, concaves ou convexes, ce fil adhérant à l'élément métallique. Ceci pourra être avantageusement réalisé en enroulant le fil 2 avec un pas convenable sur l'élément allongé à l'extrémité à ancrer.

Le fil enroulé peut être assujetti à l'élément à ancrer 1, par l'utilisation d'une colle par exemple à base de résine ou par l'utilisation d'un alliage métallique 3 à bas point de fusion, ou par tout autre moyen par exemple mécanique.

Il est souvent nécessaire de disposer de surfaces propres pour l'utilisation de certaines colles ou de certains bains d'étamage avec le maximum d'efficacité. Le nettoyage de ces surface peut être obtenu par l'utilisation de moyens chimiques (bain d'acide, etc ...) ou par l'utilisation de moyens mécaniques (sablage, papier émeri, etc ...).

Dans un mode de réalisation préféré, du moins pour certaines réalisations, l'élément allongé 1 est préalablement étamé.

Ensuite, on enroule un fil métallique 2 préalablement étamé ou galvanisé, en prenant soin que ce fil soit toujours en contact avec la surface de l'élément allongé 1. L'ensemble est ensuite immergé dans un bain d'étamage et l'excès d'alliage fusible est retiré, afin de ne conserver que ce qui adhère sous l'action de la tension superficielle. On entend ici par bain d'étamage, un bain formé de métaux à bas point de fusion utilisés purs ou en alliage, tels que plomb, étain, antimoine, bismuth, zinc, cadmium.

Le fil d'accrochage 2 enroulé présente suivant sa face appliquée sur l'élément allongé une épaisseur e comprise de préférence entre 0,1 et 0,7 fois et, avantageusement entre 0,25 et 0,5 fois, l'épaisseur E de l'élément allongé 1. Le pas de l'enroulement est compris de préférence entre 1 et 5 fois, et avantageusement entre 2 et 3 fois, l'épaisseur de ce même élément allongé.

A titre d'exemple, on a comparé ci-dessous, les résultats obtenus par la méthode d'ancrage proposée avec ceux donnés par l'art antérieur où l'on forme simplement une boucle à l'extrémité de l'élément allongé à ancrer.

### Exemple 1

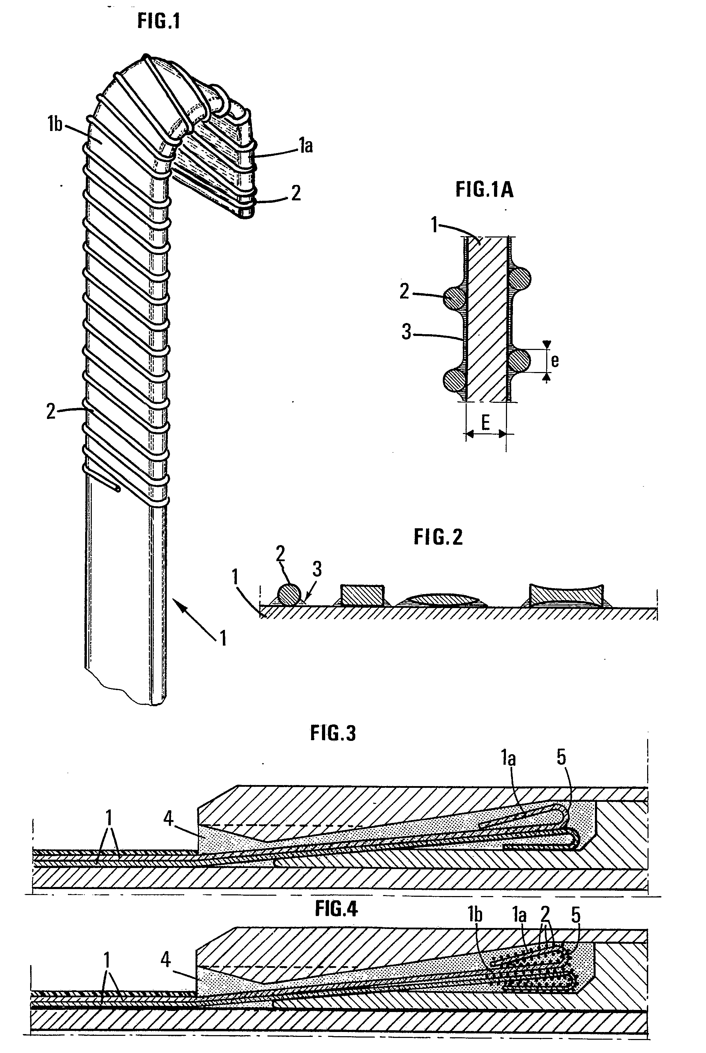

Selon la figure 3 et l'art antérieur, l'extrémité d'un fil d'acier plat 1 à hautes caractéristiques mécaniques ($R = 1360$ MPa; $E_{0,2} = 1280$ MPa) de largeur 6 mm et d'épaisseur E 3 mm est pliée suivant une boucle 5 de 10 mm de rayon de courbure. La branche courte 1a de la boucle a une longueur de 50 mm. La boucle 5 ainsi constituée est enrobée dans une résine époxy 4 de résistance à la compression 127 à 137 MPa.

L'ancrage (Fig. 3) est soumis à un effort de traction longitudinal à température ambiante. On constate qu'à partir de 82% de la limite élastique, le fil commence à se dérouler et il est alors impossible d'exercer un niveau de contrainte plus élevé.

On applique ensuite le procédé selon l'invention: le fil plat 1 (fig. 4) est nettoyé mécaniquement avec du papier émeri 300. On forme la même boucle que dans la manipulation précédente, puis on procède à l'étamage dans un bain fondu formé de 60% de plomb et 40% d'étain, en présence de chlorure de zinc comme flux décapant. On élimine l'excès d'alliage non adhérent.

On enroule sur le fil plat un fil d'accrochage 2 en fer galvanisé de 1 mm de diamètre e avec un écartement des spires de 5 mm. Cet enroulement est réalisé sur chacune des deux parties 1a et 1b formant la boucle sur une longueur de 50 mm, en s'assurant que le fil d'accrochage galvanisé 2 touche bien toute la surface étamée du fil plat 1.

L'ensemble est alors introduit dans le bain d'étamage, puis l'excès d'alliage non adhérent est rejeté. On procède à l'enrobage dans la même résine époxy que ci-dessus.

L'ancrage (Fig. 4) est encore soumis à un effort de traction croissant à température ambiante. Il faut maintenant atteindre la charge de rupture du fil 1 pour provoquer sa cassure. Celle-ci se produit généralement en dehors de la zone d'encrage.

### Exemple 2

Selon la figure 3, l'extrémité d'un fil plat 1 à hautes caractéristiques mécaniques $R = 1450$ MPa; $E_{0,2} = 1320$ MPa), de largeur 14 mm et d'épaisseur E 3 mm, est formé en une boucle 5 de 5 mm de rayon de courbure. La branche courte 1a a une longueur de 15 mm. La boucle est encore enrobée dans une résine époxy (Fig. 3). A température ordinaire on constate le déroulement du fil 1 avec arrachement partiel de la résine pour une contrainte d'environ 65% de la limite élastique.

Ensuite, suivant l'invention et la figure 4, on nettoie le fil 1 au papier émeri 300. On forme la même boucle que précédemment et on procède à l'étamage comme dans l'exemple 1, la longueur étamée sur la branche longue 1b de 1a boucle étant 100 mm.

On enroule sur le fil plat 1 un fil de fer galvanisé 2 de 1,5 mm de diamètre e avec un écartement des spires de 6 mm. On s'assure encore du contact entre le fil de fer galvinisé 2 et le fil plat 1, puis on termine l'étamage comme dans l'exemple 1.

En soumettant l'ancrage (Fig. 4) à une traction croissante, à température ordinaire, on constate encore que l'on peut rompre le fil sans endommager l'ancrage.

Dans tout ce qui précède, on a considéré le cas où l'élément d'accrochage est constitué d'un fil 2 entourant l'extrémité de l'élément 1, mais on ne sortirait pas du cadre de l'invention en adaptant à cette extrémité plusieurs fils d'accrochage ou des éléments tels que des pastilles d'accrochage rendue adhérentes à cette extrémité, par exemple, par étamage.

## Revendications

1. Procédé pour accroître la tenue à l'ancrage d'une extrémité d'un élément allongé métallique destinée à être noyée dans un milieu d'ancrage en vue de résister à des contraintes élevées, selon lequel on adapte à cette extrémité au moins un élément d'accrochage que l'on fixe audit élément allongé métallique avant de noyer l'extrémité de celui-ci dans le milieu d'ancrage caractérisé en ce qu'on utilise un mode de fixation n'entraînant aucune modification substantielle des caractéristiques mécaniques de l'élément allongé à son extrémité.

2. Procédé selon la revendication 1, caractérisé en ce qu'on entoure ladite extrémité d'au moins un fil qui constitue ledit élément d'accrochage et de dimension suffisante pour augmenter la tenue à l'ancrage de l'élément allongé.

3. Procédé selon la revendication 2, caractérisé en ce que l'on enroule ledit fil d'accrochage en hélice autour de l'extrémité de l'élément allongé.

4. Procédé selon l'une des revendication précédentes, caractérisé en ce que l'on fait adhérer par étamage l'élément d'accrochage audit élément métallique.

5. Procédé selon l'une des revendications 1 à 3, caractérisé en ce que l'on fait adhérer par collage l'élément d'accrochage audit élément métallique.

6. Ancrage obtenu par le procédé selon la revendication 1, caractérisé en ce que l'épaisseur dudit fil d'accrochage est comprise entre 0,1 et 0,7 fois l'épaisseur de l'élément allongé métallique.

7. Ancrage obtenu par le procédé selon la revendication 1, caractérisé en ce que l'épaisseur dudit fil d'accrochage est comprise entre 0,25 et 0,5 fois l'épaisseur de l'élément allongé métallique.

8. Ancrage selon l'une des revendication 6 ou 7, caractérisé en ce que le pas d'enroulement dudit fil d'accrochage est compris entre 1 et 5 fois l'épaisseur de l'élément allongé.

9. Ancrage selon la revendication 8, caractérisé en ce que le pas d'enroulement dudit fil d'accrochage est compris entre 2 et 3 fois l'épaisseur de l'élément allongé.

10. Ancrage obtenu par le procédé selon la revendication 1, caractérisé en ce que des pastilles d'accrochage sont adaptées à ladite extrémité.

## Patentansprüche

1. Verfahren zum Steigern des Verankerungsverhaltens eines Endes eines länglichen metallischen Elementes zur Einbettung in ein verankerndes Medium, um beständig gegen erhöhte Beanspruchungen zu sein, wobei man an dieses Ende wenigstens ein Haftelement anpaßt, das man an diesem länglichen metallischen Element befestigt, bevor dessen Ende in das verankernde Medium eingebettet wird, dadurch gekennzeichnet, daß man eine Befestigungsart zur Anwendung bringt, die keine wesentliche Veränderung der mechanischen Eigenschaften des länglichen Elements an seinem Ende mit sich bringt.

2. Verfahren nach Anspruch 1, dadurch gekennzeichnet, daß man dieses Ende mit wenigstens einem diese Haftelement bildenden Draht und von einer ausreichenden Abmessung umgibt, um das Verankerungsverhalten des länglichen Elements zu erhöhen.

3. Verfahren nach Anspruch 2, dadurch gekennzeichnet, daß man diesen Verankerungsdraht spiralförmig um das Ende des länglichen Elements wickelt.

4. Verfahren nach einem der vorhergehenden Ansprüche, dadurch gekennzeichnet, daß man durch Verzinnen das Haftelement zum Haften am metallischen Element bringt.

5. Verfahren nach einem der Ansprüche 1 bis 3, dadurch gekennzeichnet, daß man mittels Verkleben das Haftelement am metallischen Element zum Haften bringt.

6. Verankerung, erhalten nach dem Verfahren des Anspruchs 1, dadurch gekennzeichnet, daß die Dicke des Haftdrahtes zwischen dem 0,1 bis 0,7fachen der Dicke des länglichen metallischen Elements beträgt.

7. Verankerung, erhalten nach dem Verfahren des Anspruchs 1, dadurch gekennzeichnet, daß die Dicke des Haftdrahtes zwischen dem 0,25 und 0,5fachen der Dicke des länglichen metallischen Elements liegt.

8. Verfahren nach einem der Ansprüche 6 oder 7, dadurch gekennzeichnet, daß der Wicklungsschritt dieses Haftdrahtes zwischen dem 1 bis 5fachen der Dicke des länglichen metallischen Elements beträgt.

9. Verankerung nach Anspruch 8, dadurch gekennzeichnet, daß der Wickelschritt dieses Verankerungsdrahtes zwischen dem 2 und 3fachen der Dicke des länglichen Elements liegt.

10. Verankerung, erhalten nach dem Verfahren des Anspruchs 1, dadurch gekennzeichnet, daß Haftpastillen an dieses Ende angepaßt bzw. an diesem angebracht sind.

## Claims

1. A process for increasing the anchorage strength of one end of an elongate metal element intended to be buried in a anchorage medium for withstanding high stresses, in which there is fitted to this end at least one engagement element which is fixed to said elangate metal element before the end thereof is buried in the anchorage medium, characterized in that a fixing method is used causing no substantial modification of the mechanical characteristics of the elongate element at its end.

2. Process according to claim 1, characterized in that said end is surrounded with at least one wire which forms said engagement element and which is of a size sufficient for increasing the anchorage strength of the elongate element.

3. Process according to claim 1, characterized in that said engagement wire is wound helically about the end of the elongate element.

4. Process according to one of the preceding claims, characterized in that the engagement element is caused to adhere by tinning to said metal element.

5. Process according to one of claims 1 to 3, characterized in that the engagement element is caused to adhere by bonding to said metal element.

6. Anchorage obtained by the process according to claim 1, characterized in that the thickness of said engagement wire is between 0.1 and 0.7 times the thickness of the elongate metal element.

7. Anchorage obtained by the process according to claim 1, characterized in that the thickness of said engagement wire is between 0.25 and 0.5 times the thickness of the elongate metal element.

8. Anchorage according to one of claims 6 or 7, characterized in that the windung pitch of said egagement wire is between 1 and 5 times the thickness of the elongate element.

9. Anchorage according to claim 8, characterized in that the windung pitch of said egagement wire is between 2 and 3 times the thickness of the elongate element.

10. Anchorage obtained by the process according to claim 1, characterized in that said egagement slugs are fitting to said end.

**FIG.1**

**FIG.1A**

**FIG.2**

**FIG.3**

**FIG.4**